# EUROPÄISCHE PATENTSCHRIFT

(11) **EP 2 141 378 B1**
(45) Veröffentlichungstag und Bekanntmachung des Hinweises auf die Patenterteilung: **05.11.2014**
(21) Anmeldenummer: 09162554.1
(22) Anmeldetag: 12.06.2009
(51) Int. Cl.: F16D 48/06

(54) **Verfahren zum Ansteuern einer Kupplungsanordnung**
Method for controlling a coupling assembly
Procédé destiné à la commande d'un agencement d'embrayage

(30) Priorität: 01.07.2008 DE 102008032245
(43) Veröffentlichungstag der Anmeldung: 06.01.2010
(73) Patentinhaber: GETRAG Getriebe- und Zahnradfabrik Hermann Hagenmeyer GmbH & Cie KG, 74199 Untergruppenbach (DE)
(72) Erfinder: Glatthaar, Josef, 78727 Oberndorf (DE); Thum, Stefan, 82152 Planegg (DE)
(74) Vertreter: Witte, Weller & Partner Patentanwälte mbB

(56) Entgegenhaltungen:
- EP-A2- 1 411 262
- WO-A1-2006/087098
- DE-A1- 10 150 597
- DE-A1-102006 030 142
- US-A1- 2003 150 683
- US-A1- 2004 038 776
- US-A1- 2004 186 645
- US-A1- 2008 076 631

## Beschreibung

Die vorliegende Erfindung betrifft ein Verfahren zum Öffnen einer geschlossenen Kupplungsanordnung eines Antriebsstrangs für ein Kraftfahrzeug.

Derartige Verfahren dienen dazu, einen Gangwechsel insbesondere bei einem Doppelkupplungsgetriebe möglichst ruckfrei durchzuführen.

Kraftfahrzeuge mit automatisch betätigter Kupplung und Getriebe sind allgemein bekannt. Bei einem Gangwechsel unterbricht die automatische Kupplung den Kraftfluss zwischen Motor und Antriebsrädern und arbeitet üblicherweise mit hohem Komfort, indem sie vergleichsweise weich öffnet und schließt. Bei automatisierten Stufengetrieben kommen auch Doppelkupplungsgetriebe mit zwei parallelen Trennkupplungen zum Einsatz, wobei eine Zugkraftunterbrechung dadurch verhindert wird, dass in zeitlicher Überschneidung ein Gang, der mit einer ersten Trennkupplung verbunden ist, ausgelegt und gleichzeitig ein anderer Gang mittels einer zweiten Trennkupplung eingelegt wird.

Ein weiches Öffnen und Schließen der beiden Trennkupplungen zur Vermeidung eines Schaltrucks führt zu langen Schaltvorgängen. Eine Verkürzung der Schaltdauer durch beschleunigtes Öffnen und Schließen der Trennkupplungen führt üblicherweise zu einem Schaltruck und somit zu einem wenig komfortablen Schaltverhalten.

Ein präziser Gangwechsel durch zeitlich überschneidendes Öffnen und Schließen zweier Kupplungen setzt eine genaue Bestimmung eines Öffnungspunktes der zu öffnenden Kupplung voraus. Dadurch, dass der Kupplung ein permanent wechselndes Motordrehmoment beaufschlagt wird, ist eine präzise Bestimmung des Öffnungspunktes schwierig.

Aus der DE 101 50 597 A1 ist ein Verfahren bekannt, bei dem Totzeiten bei Betätigung der Kupplungsanordnung vermieden bzw. die Schaltzeiten verringert werden, indem die Kupplungsanordnung in einem derartigen Betätigungszustand gehalten wird, dass das von ihr übertragbare Moment genau einem von der Antriebseinheit abgegebenen Moment entspricht oder geringfügig kleiner als dieses ist.

Das bedeutet, dass die Kupplung nahe dem Öffnungspunkt betrieben wird und daher permanent in einem Schlupfzustand ist, d.h. dass die Eingangsdrehzahl der Kupplung größer (im Zugbetrieb) oder kleiner (im Schubbetrieb) ist als die Ausgangsdrehzahl. Dieser Zustand wird als Mikroschlupf bezeichnet.

Nachteilig dabei ist es, dass die permanent schlupfende Kupplung zu Leistungsverlust in dem Antriebsstrang führt.

Ferner wird bei dem Verfahren aus der DE 10 150 597 A1 die Korrelation von Kupplungsdruck zu dem übertragenen Kupplungsmoment anhand von Kennfeldern ermittelt. Diese Wertepaare werden anhand der schlupfenden Kupplung ermittelt. Diese Wertepaare sind jedoch nicht notwendigerweise aktuell, so dass der Schaltablauf nur mit einer geringen Präzision eingeleitet werden kann.

Aus der US 2003/0150683 A1 ist eine Steuerungsvorrichtung für einen Antriebsstrang bekannt mit einem stufenlos einstellbaren Getriebe und einer Kupplung, die in Reihe mit dem Getriebe geschaltet ist, wobei ein Kupplungsdruck zunächst reduziert wird, bis ein Schlupfzustand der Kupplung auftritt und dann nach dem Erfassen des Schlupfzustandes wieder angehoben wird, um einen Eingriffspunkt der Kupplung zu bestimmen.

Der Erfindung liegt daher die Aufgabe zugrunde, ein Verfahren zum Ansteuern einer Kupplungsanordnung bereitzustellen, bei dem der Leistungsverlust reduziert ist und gleichzeitig ein harmonischer Momentenübergang bei einem Gangwechsel ohne Zugkraftunterbrechung möglich ist.

Diese Aufgabe wird gelöst durch das eingangs genannte Verfahren, bei dem das von der Kupplungsanordnung übertragbare Moment bis zu einem Öffnungspunkt verringert wird, bei dem kein Moment mehr über die Kupplungsanordnung übertragbar ist, und wobei vor Erreichen des Öffnungspunktes die Kupplungsanordnung in einen zwischenzeitlichen Schlupfzustand gebracht wird, wobei der auf die Kupplungsanordnung aufgebrachte Druck, bei dem ein vorab definiertes Schlupfniveau erreicht ist, und das übertragbare Drehmoment erfasst und als Wertepaar gespeichert werden, wobei der auf die Kupplungsanordnung aufgebrachte Druck nach Erreichen des Schlupfzustandes erhöht wird, so dass der Schlupfzustand wieder aufgehoben wird, und wobei die Kupplungsanordnung vor jedem Schaltvorgang in den zwischenzeitlichen Schlupfzustand gebracht wird.

Hierdurch kann ein auf die Kupplungsanordnung aufgebrachter Druck in Bezug zu dem übertragbaren Moment gesetzt werden.

Dadurch, dass die Kupplungsanordnung zwischen den Schaltvorgängen vollständig geschlossen ist, tritt kein schlupfbedingter Leistungsverlust auf. Dadurch, dass die Kupplung vor jedem Schaltvorgang eigens in einen zwischenzeitlichen Schlupfzustand gebracht wird, kann ein Wertepaar bestehend aus aufgebrachtem Druck und übertragbarem Drehmoment präzise und aktuell bestimmt werden.

Das erfindungsgemäße Verfahren ist auf Reibkupplungen von Vorgelegegetrieben, wie automatisierten Schaltgetrieben oder Doppelkupplungsgetrieben, anwendbar. Gleichermaßen ist das erfindungsgemäße Verfahren auch auf Automatikgetriebe mit konventionellen Planetenradsätzen anwendbar, bei denen die Gänge permanent eingelegt sind und die einen Wandler mit einer erfindungsgemäß angesteuerten Kupplung aufweisen.

Die erfindungsgemäß angesteuerten Kupplungen können nasslaufende Kupplungen, wie nasslaufende Lamellenkupplungen, sein. Die Kupplungen können jedoch auch trockenlaufende Kupplungen sein.

Vorliegend soll sich jede Bezugnahme auf einen Kupplungsdruck in gleicher Weise auf eine Kupplungskraft beziehen, die beispielsweise bei einer nicht hydraulischen bzw. trockenen Aktuatoranordnung (wie beispielsweise einer elektromechanischen oder elektromagnetischen Aktuatoranordnung) als Zustandsgröße verwendet wird.

Die Aufgabe wird somit vollkommen gelöst.

Bei dem erfindungsgemäßen Verfahren ist es vorteilhaft, wenn das von der Kupplungsanordnung übertragbare Drehmoment linear abgesenkt wird.

In einer besonderen Ausführungsform dieses Verfahrens ist es vorteilhaft, wenn das von der Kupplungsanordnung übertragbare Drehmoment zum Erreichen des Schlupfzustandes pulsförmig abgesenkt wird.

Dadurch kann ein reproduzierbares Abreißverhalten der Kupplung erreicht werden.

Weiterhin ist es vorteilhaft, wenn der Kupplungsdruck hierbei ab einem vorab definierten Schlupfniveau um einen vordefinierten Wert angehoben wird.

Dadurch kann der Schlupfzustand der Kupplungsanordnung schnell aufgehoben werden, ohne den Schlupf gesondert messen zu müssen.

Weiterhin ist es vorteilhaft, wenn das gespeicherte Wertepaar zum Steuern der Kupplungsanordnung bei nachfolgenden Öffnungsvorgängen verwendet wird.

Dadurch lässt sich der Schlupfzustand schneller einleiten und die Kupplungssteuerung optimieren.

Weiterhin ist es bevorzugt, wenn das gespeicherte Wertepaar zum Steuern einer zweiten Kupplungsanordnung verwendet wird.

Dadurch können bei Mehrfachkupplungen, insbesondere bei Doppelkupplungen, Messwerte zwischen einzelnen Kupplungsanordnungen ausgetauscht werden.

Weiterhin ist es vorteilhaft, wenn die Kupplungsanordnung eine nasslaufende Kupplung aufweist, da der Kupplungsdruck einer nasslaufenden Kupplung einfach zu steuern ist.

In einer alternativen Ausführungsform ist es vorteilhaft, die Kupplungsanordnung mittels eines hydraulischen Aktuators zu betätigen. Dies stellt eine kostengünstige und gut steuerbare Variante einer Kupplungsansteuerung dar.

Besonders bevorzugt ist es, wenn in einem geöffneten Zustand, in dem von der Kupplungsanordnung kein Drehmoment übertragen werden kann, ein hydraulischer Innendruck der Kupplungsanordnung erfasst wird und als Referenzdruck für den auf die Kupplungsanordnung aufgebrachten Druck verwendet wird.

Dadurch kann der Kupplungsdruck auch bei schwankendem Umgebungsdruck besonders präzise eingestellt werden.

Diese Ausführungsform wird unabhängig von dem Verfahren zum Einleiten eines zwischenzeitlichen Schlupfzustandes als eigene Erfindung angesehen.

Weiterhin ist es vorteilhaft, wenn der Referenzdruck im geschlossenen Zustand der Kupplungsanordnung entsprechend eines variierenden Ausdrucks angepasst wird.

Dadurch kann der Referenzdruck an einen variierenden Außendruck auch bei geschlossener Kupplungsanordnung angepasst werden.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine schematische Darstellung eines Antriebsstrangs für ein Kraftfahrzeug zur Erläuterung des erfindungsgemäßen Verfahrens;
- Fig. 2: ein Zeitablaufdiagramm eines Kupplungsdrucks zweier Kupplungen, einer Schlupfdrehzahl, zweier Getriebedrehzahlen und einer Motordrehzahl einer Ausführungsform des erfindungsgemäßen Verfahrens;
- Fig. 3: ein Zeitablaufdiagramm des Kupplungsdrucks gemäß einer besonderen Ausführungsform des erfindungsgemäßen Verfahrens;
- Fig. 4: ein mögliches Schaltbild zur Erläuterung der Druckregelung des Kupp lungsdrucks.

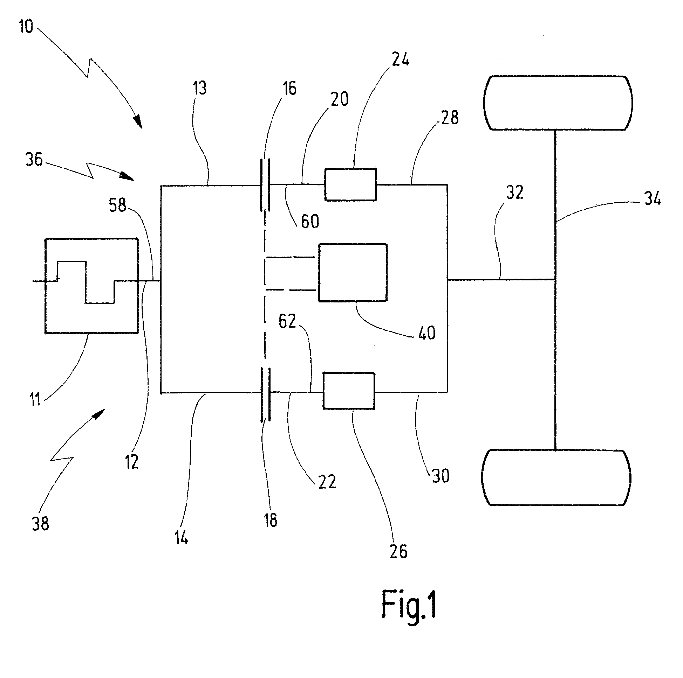

In Fig. 1 ist ein Antriebsstrang eines Kraftfahrzeuges generell mit 10 bezeichnet.

Der Antriebsstrang 10 weist eine Antriebseinheit 11 mit einer Abtriebswelle 12 auf. Die Abtriebswelle 12 ist mit zwei Eingangsgliedern 13, 14 von zwei Kupplungen 16, 18 verbunden. Ausgangsglieder der Kupplungen 16, 18 sind jeweils mit Getriebeeingangswellen 20, 22 verbunden, die die Kupplungen 16, 18 jeweils mit einem Teilgetriebe 24, 26 verbinden. Die Teilgetriebe 24, 26 sind jeweils über eine Getriebeabtriebswelle 28, 30 mit einer Kardanwelle 32 (oder einer einzelnen Getriebeausgangswelle) verbunden. Die Kardanwelle 32 ist vorzugsweise über ein nicht dargestelltes Differentialgetriebe mit einer angetriebenen Achse 34 verbunden. Dadurch sind zwischen der Abtriebswelle 12 und der Kardanwelle 32 zwei parallele Pfade 36, 38 zur Kraftübertragung nach der Art eines Doppelkupplungsgetriebes gebildet. Der Antriebsstrang 10 weist weiterhin eine Steuereinheit 40 auf. Die Steuereinheit 40 ist über nicht dargestellte Kupplungsaktuatoren mit den Kupplungen 16, 18 verbunden.

Bei dem schematisch dargestellten Antriebsstrang 10 wird ein Motormoment, das von der Antriebseinheit 11 erzeugt wird, auf die Abtriebswelle 12 übertragen. Das Motormoment wird von der Abtriebswelle 12 auf die Kupplungen 16, 18 übertragen. Die Kupplungen 16, 18 verbinden jeweils in einem geschlossenen Zustand die Abtriebswelle 12 mit der Getriebeeingangswelle 20 bzw. mit der Getriebeeingangswelle 22 kraftschlüssig. Mittels der Teilgetriebe 24, 26 wird das Motordrehmoment, das an den Getriebeeingangswellen 20, 22 anliegt, untersetzt bzw. übersetzt auf die Getriebeabtriebswellen 28, 30 übertragen. Das derart übersetzte bzw. untersetzte Drehmoment der Getriebeabtriebswellen 28, 30 wird mittels der Kardanwelle 32 auf die angetriebene Achse 34 übertragen, um das Kraftfahrzeug anzutreiben.

Die beiden Kupplungen 16, 18 werden von der Steuereinheit 40 derart gesteuert, dass grundsätzlich nur eine der beiden Kupplungen 16, 18 geschlossen ist. Die andere der beiden Kupplungen 16, 18 ist geöffnet. Dadurch wird je nach Ansteuerung der Kupplungen 16, 18 das Motordrehmoment über einen der beiden Pfade 36, 38 übertragen. Üblicherweise weisen derartige Teilgetriebe 24, 26 mehrere Gangstufen auf (ein Teilgetriebe die geraden, das andere Teilgetriebe die ungeraden Gangstufen).

Gangwechsel können ohne Zugkraftunterbrechung durch überschneidendes Betätigen der Kupplung 16, 18 vollzogen werden.

Es versteht sich, dass der in Fig. 1 gezeigte Antriebsstrang 10 eine allgemein schematische Darstellung ist und somit die einzelnen Elemente allgemein zu verstehen sind. Dementsprechend können die Kupplungen 16, 18 sowohl als trockene Reibkupplung als auch als nasslaufende Reibkupplung ausgebildet sein. Weiterhin ist der dargestellte Antriebsstrang 10 sowohl für Kraftfahrzeuge mit einer angetriebenen Achse 34 als auch für allradgetriebene Fahrzeuge denkbar. Weiterhin könnte der Antriebsstrang auch ein automatisiertes Schaltgetriebe sein.

Bei einem Gangwechsel wird üblicherweise zunächst in einem der Teilgetriebe 24, 26, das mit der geöffneten Kupplung 16, 18 verbunden ist, eine Ziel-Gangstufe eingelegt. Danach wird die geschlossene der Kupplungen 16, 18 geöffnet. Danach oder zeitgleich wird die geöffnete der beiden Kupplungen 16, 18 geschlossen. So wird der Kraftfluss von einem der beiden Pfade 36, 38 auf den anderen der Pfade 36, 38 verlagert.

Die Kupplungen 16, 18 werden geöffnet, indem das von ihnen übertragbare Moment gesenkt wird, bis kein Moment mehr übertragen werden kann. Das übertragbare Moment wird durch Änderung eines von einem jeweiligen Aktuator aufgebrachten Kupplungsdrucks variiert.

Die Kupplungen 16, 18 werden geschlossen, indem der jeweilige Kupplungsdruck angehoben wird, bis die zugeordnete Kupplung schlupffrei ist. Vorzugsweise wird der Kupplungsdruck anschließend noch etwas erhöht (die Kupplung wird überdrückt). Auch bei hohem Drehmomentgradienten geht die Kupplung folglich nicht in einen Schlupfzustand.

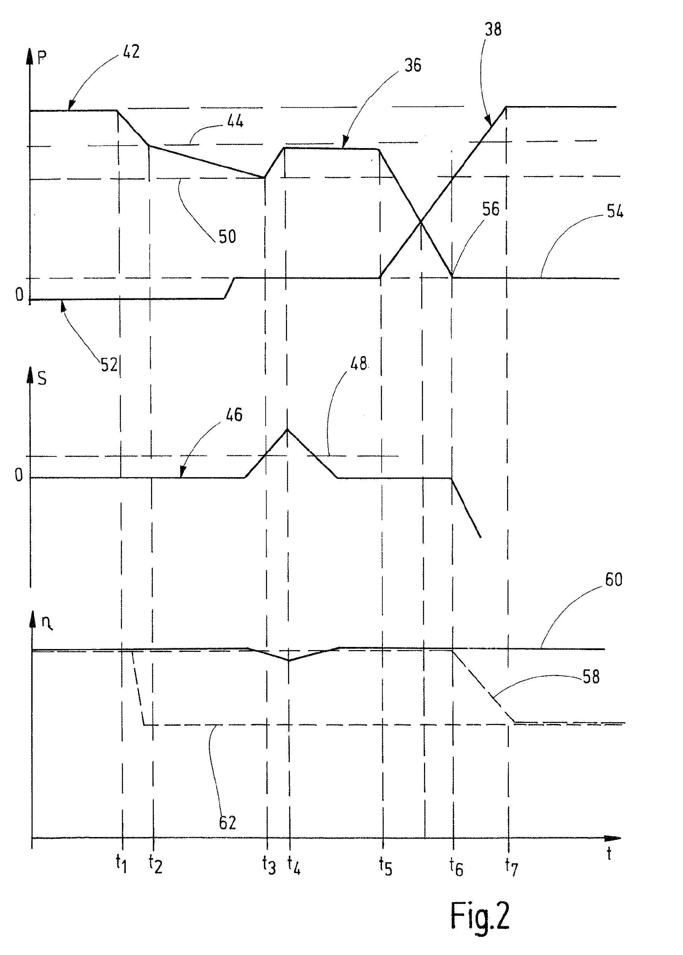

In Fig. 2 ist ein Zeitablaufdiagramm dargestellt, in dem von oben nach unten zunächst ein Kupplungsdruckverlauf 42, 52 (P) der Kupplungen 16, 18 bei einem Gangwechsel, ein Kupplungsschlupf 46 (S) der öffnenden der Kupplungen 16, 18 und Drehzahlverläufe 60, 62, 58 (n) der Teilgetriebe 24, 26 und der Antriebseinheit 12 bei einem Gangwechsel dargestellt sind.

In Fig. 2 wird der Kraftfluss zunächst über den Pfad 36 übertragen, und durch Öffnen der Kupplung 16 und Schließen der Kupplung 18 wird der Kraftfluss auf den Pfad 38 verlagert.

Die Darstellung der Fig. 2 geht von einem Zustand aus, bei dem die Kupplung 16 vollständig geschlossen ist, wie es bei 42 gezeigt ist, und die Kupplung 18 vollständig geöffnet ist. In diesem Zustand verläuft der Kraftfluss über den Pfad 36. Der vollständig geschlossene (überpresste) Zustand der Kupplung 16 dauert bis zu einem Zeitpunkt t₁ an.

Auf ein Gangwechsel-Anforderungssignal hin (zum Zeitpunkt t₁), das in einem Handschaltmodus beispielsweise durch Betätigung eines Schalthebels ausgelöst wird, in einem Automatikmodus hingegen von einer Getriebesteuerung eigenständig ausgelöst wird, erfolgt bis zu einem Zeitpunkt t₂ zunächst ein schnelles Absenken des Kupplungsdrucks von der Überpressung auf einen Wert, der bei 44 gezeigt ist. Bei diesem Kupplungsdruck ist das von der Kupplung übertragbare Drehmoment immer noch größer als das von der Antriebseinheit 12 abgegebene Drehmoment.

Ab einem Zeitpunkt t₂ wird der Kupplungsdruck üblicherweise langsamer gesenkt als bis zum Zeitpunkt t₂, wobei gleichzeitig ein Schlupf der Kupplung gemessen wird. Der Verlauf des Kupplungsschlupfes der Kupplung 16 ist in Fig. 2 bei 46 dargestellt. Dabei steigt der Kupplungsschlupf während des abnehmenden Kupplungsdrucks 42 ab einem gewissen Zeitpunkt, bis er zum Zeitpunkt t₃ einen bestimmten Wert erreicht hat, der bei 48 gezeigt ist. Der Zeitpunkt t₃, an dem die Kupplung 16 den Schlupfzustand 48 (bzw. ein vorbestimmtes Schlupfniveau) erreicht, ist abhängig von dem Motormoment. Bis zu dem Zeitpunkt t₃ wird das von der Kupplung 16 übertragbare Drehmoment vorzugsweise auf einen Wert gesenkt, der ca. 20 Nm unter einer Haftgrenze der Kupplung 16 liegt.

Ab dem Zeitpunkt t₃, wenn der Schlupfzustand 48 gemessen wird, wird der Kupplungsdruck 42 nicht weiter abgesenkt sondern wieder erhöht, um den erreichten Schlupfzustand 48 wieder aufzuheben. Der Schlupfzustand 48 entspricht üblicherweise einer Differenzdrehzahl zwischen dem Eingangsglied 13 und der Getriebeeingangswelle 20 von ca. 20 Umdrehungen/min. Das Anheben des Kupplungsdrucks 42 erfolgt bis zum Zeitpunkt t₄. Dadurch, dass die Kupplung einer gewissen Trägheit unterliegt, steigt der Schlupf nach t₃ zunächst weiter an und fällt erst später wieder unter den Schlupfzustand 48. Das Anheben des Kupplungsdrucks 42 kann erfolgen, bis der gemessene Kupplungsschlupf aufgehoben ist, oder aber der Kupplungsdruck 42 kann um einen vordefinierten Wert angehoben werden. Wie in Fig. 2 dargestellt ist, nimmt durch Anheben des Kupplungsdrucks 42 ab dem Zeitpunkt t₄ der Kupplungsschlupf 46 wieder ab und wird bis zu einem Zeitpunkt t₅ auf einen Wert unterhalb des Schlupfzustandes 48 gesenkt, wobei der Kupplungsschlupf 46 vorzugsweise auf Null gesenkt wird. Zu dem Zeitpunkt ts ist das übertragbare Drehmoment vorzugsweise gleich dem von der Antriebseinheit 11 abgegebenen Drehmoment. Von dem Zeitpunkt t₄ bis zu dem Zeitpunkt t₅ wird der Kupplungsdruck der Kupplung 16 derart erhöht, dass das von der Kupplung 16 übertragbare Drehmoment vorzugsweise um ca. 20 Nm ansteigt. Diese Korrektur dient auch dazu, Ungenauigkeiten des aktuellen Motormomentes zu kompensieren. Dies ist der optimale Kupplungsdruck in Bezug auf das von der Antriebseinheit 11 abgegebene Motormoment, um das Öffnen der Kupplung 16 einzuleiten. Der davor zwischenzeitlich eingerichtete Schlupfzustand wird auch als Semischlupf bezeichnet.

In Fig. 2 ist weiterhin der Kupplungsdruck der Kupplung 18 dargestellt, die zunächst vollständig geöffnet ist, wie es bei 52 gezeigt ist. Zu einem Zeitpunkt zwischen dem Zeitpunkt t₁ und t₃ wird die Kupplung 18 vorbereitet, geschlossen zu werden, indem der Kupplungsdruck um einen vordefinierten Wert leicht erhöht wird. Diese Vorbereitung zum Schließen der Kupplung entspricht in einer besonderen Ausführungsform dem Befüllen der Kupplung 18 bzw. des zugeordneten Aktuators mit Kupplungsöl (bis zum Eingriffspunkt bzw. Kisspoint der Kupplung 18).

Zum Zeitpunkt t₅ werden das zeitgleiche Öffnen der Kupplung 16 und das Schließen der Kupplung 18 eingeleitet. Dabei wird der Kupplungsdruck 42 der Kupplung 16 vorzugsweise linear abgesenkt auf ein Niveau, bei dem kein Drehmoment mehr übertragen werden kann, das bei 54 gezeigt ist. Gleichzeitig wird der Kupplungsdruck 52 der Kupplung 16 bis zu einem Zeitpunkt t₇ vorzugsweise linear auf einen Wert angehoben, der einer Überpressung entspricht. Zum Zeitpunkt t₆ erreicht die Kupplung 16 einen Öffnungspunkt 56 und die Kupplung 18 einen Schließpunkt, an dem das Motormoment von der öffnenden Kupplung 16 vollständig auf die schließende Kupplung 18 übergeben ist.

Dadurch, dass die Kupplung 16 sich zum Zeitpunkt t₅ in einem definierten Zustand befindet und die Kupplung 18 im befüllten, aber geöffneten Zustand befindet, können der Öffnungspunkt 56 bzw. der Schließpunkt der Kupplungen 16, 18 präzise und zeitgleich durchlaufen werden, wodurch ein harmonischer Momentenübergang beim Gangwechsel erzielt wird.

Nach dem Überschreiten des Öffnungspunktes 56 zu dem Zeitpunkt t₆ fällt der gemessene Kupplungsschlupf 46 auf einen negativen Wert ab, da die geöffnete Kupplung 16 dann kein Drehmoment mehr übertragen kann.

Die Drehmomentverläufe der Abtriebswelle 12, der Getriebeeingangswelle 20 und der Getriebeeingangswelle 22 sind ebenfalls in Fig. 2 dargestellt und jeweils entsprechend mit 58, 60 und 62 bezeichnet. Bis zu dem Zeitpunkt t₁ sind die Drehzahlen 58, 60 und 62 der Abtriebswelle 12 und der Getriebeeingangswellen 20, 22 identisch. Zwischen dem Zeitpunkt t₁ und t₂ wird in dem Teilgetriebe 26, das der geöffneten Kupplung zugeordnet ist, eine Gangstufe eingelegt. Dadurch verändert sich die Drehzahl 62 der Getriebeeingangswelle 22. Die Drehzahlen 58, 60 sind bis zum Zeitpunkt t₆ im Wesentlichen identisch, mit Ausnahme eines Zeitraums vor und nach dem Zeitpunkt t₄, in dem, wie oben beschrieben ist, die Kupplung 16 zwischenzeitlich in Schlupf gebracht wird und somit eine Drehzahldifferenz zwischen der Abtriebswelle 12 und der Getriebeeingangswelle 20 auftritt. Nach dem Zeitpunkt t₆, wenn die Kupplung 16 geöffnet und die Kupplung 18 geschlossen wird, senkt sich die Drehzahl 58 der Abtriebswelle 12 von der Drehzahl 60 der Getriebeeingangswelle 20 auf die Drehzahl 62 der Getriebeeingangswelle 22, da zu diesem Zeitpunkt t₇ der Kraftfluss über den Pfad 38 übertragen wird.

Zum Zeitpunkt t₇ befindet sich die Kupplung 18 in Überpressung, und die Kupplung 16 ist geöffnet.

Bei dem in Fig. 2 dargestellten Vorgang zum Öffnen einer der Kupplungen 16, 18 wird der Kupplungsdruck zum Zeitpunkt t₃, wenn die zu öffnende Kupplung in den Schlupfzustand 48 kommt, gemessen und mit einem von der Kupplung 16, 18 übertragbaren Drehmoment in Beziehung gesetzt. Diese korrelierenden Werte werden gemessen und als Wertepaar gespeichert. Auf Grundlage dieses gemessenen und gespeicherten Wertepaars kann die Steuerung der Kupplung 16, 18 dahingehend optimiert werden, dass zum einen der Kupplungsdruck aus dem Zustand der Überpressung 42 zu dem Kupplungsdruck 44 schneller abgesenkt wird, so dass im Allgemeinen der Vorgang bis zum Öffnen der Kupplung schneller vollzogen werden kann. Dieser gemessene Kupplungsdruck in Bezug auf das von der Kupplung übertragbare Drehmoment kann sowohl für folgende Öffnungsvorgänge der selben der Kupplungen 16, 18 als auch für Öffnungsvorgänge der anderen der Kupplungen 16, 18 verwendet werden. Dadurch lässt sich anhand der gemessenen Werte die Steuerung zum Öffnen und zum Schließen der Kupplungen kontinuierlich optimieren. Der gemessene Kupplungsdruck in Bezug auf das übertragbare Drehmoment kann abhängig sein von der eingelegten Gangstufe. Daher ist es bevorzugt, wenn die gemessenen Werte auch an die eingelegte Gangstufe angepasst werden.

Das gemessene Wertepaar bestehend aus dem übertragbaren Drehmoment und dem Kupplungsdruck kann einer Plausibilitätsprüfung unterzogen werden und dementsprechend gespeichert und verwendet bzw. verworfen werden.

Das Wertepaar kann auch zum Steuern der Kupplung 18 bei nachfolgenden Öffnungsvorgängen verwendet werden. Dabei ist allerdings zu beachten, dass sich die Kupplungen 16, 18 in ihrem Momentenverhalten unterschiedlich verhalten können.

Auch ist es möglich, die Wertepaare, die an beiden Kupplungen 16, 18 erfasst worden sind, miteinander zu kombinieren, um diese für einen aktuellen Steuerungsvorgang zu nutzen. Dabei kann es von Vorteil sein, wenn Korrekturwerte für die einzelnen Kupplungen 16, 18 ermittelt werden und eine Differenz der einzelnen Korrekturwerte zur Steuerung des aktuellen Steuerungsvorgangs genutzt wird.

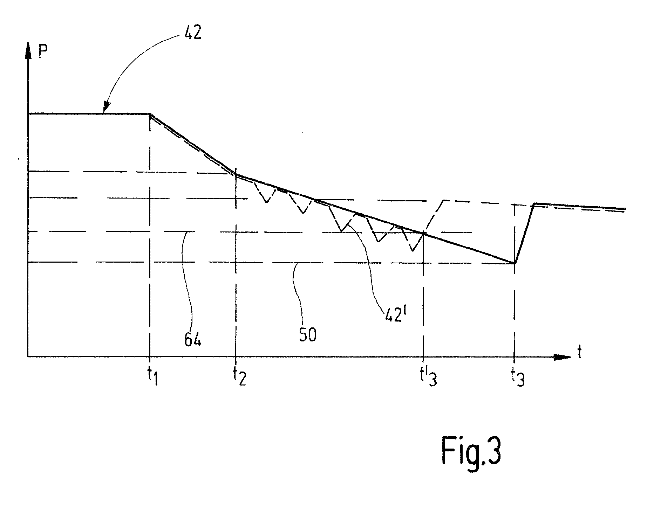

In Fig. 3 ist eine besondere Ausführungsform eines Kupplungsdruckverlaufs P der zu öffnenden Kupplung 16 des erfindungsgemäßen Verfahrens dargestellt. Dabei ist der Kupplungsdruckverlauf 42 aus Fig. 2 als durchgezogene Linie dargestellt und die besondere Ausführungsform als gestrichelte Linie 42'.

Zunächst ist der Druckverlauf bis zum Zeitpunkt t₂ identisch mit dem Verlauf aus Fig. 2. Zum Zeitpunkt t₂ wird, wie in Fig. 2 dargestellt, der Kupplungsdruck langsamer gesenkt, um den Schlupfzustand zu erreichen. Im Gegensatz zu Fig. 2 ist der hier dargestellte gestrichelte Verlauf nicht geradlinig abfallend sondern pulsförmig abfallend. Dieser pulsförmige Verlauf entsteht durch Überlagerung des rampenförmigen geradlinigen Verlaufs aus Fig. 2 mit einer Zickzackfunktion. Hierdurch kann der zwischenzeitliche Schlupfzustand schneller hervorgerufen werden. Folglich wird bereits zu einem Zeitpunkt t₃', der zeitlich vor dem Zeitpunkt t₃ in Fig. 2 liegt, der Schlupfzustand erreicht. Der Kupplungsdruck wird nicht so weit abgesenkt, so dass ab einem Kupplungsdruck 64, der größer ist als der entsprechende Wert 50 der Fig. 2, der Druck wieder erhöht werden kann, um den zwischenzeitlichen Schlupfzustand wieder aufzuheben. Der folgende Verlauf des Kupplungsdrucks ist identisch mit dem in Fig. 2 dargestellten.

Kupplungen neigen im Allgemeinen dazu, zu haften bzw. Haftreibung aufzubauen. Durch den derart schwankenden Kupplungsdruck wird bewirkt, dass der zwischenzeitliche Schlupfzustand reproduzierbar und früher erreicht werden kann, weil die Haftreibung durch den schwankenden Kupplungsdruck früher überwunden wird. Dadurch muss der Kupplungsdruck nicht so weit abgesenkt werden, und der Schlupfzustand kann bei höherem Kupplungsdruck erreicht werden. Weiterhin muss der Kupplungsdruck zum Zeitpunkt t₃' um einen geringeren Wert angehoben werden, um den Schlupfzustand wieder aufzuheben.

Der Verlauf des Kupplungsdrucks ist nicht auf die in Fig. 3 dargestellte Form beschränkt. Die der geradlinigen Rampenfunktion überlagerte Funktion kann als Sinusfunktion, als Sägezahlfunktion, als Pulsfolge oder dergleichen ausgebildet sein.

Das in den Fig. 2 und 3 dargestellte Verfahren ist im Allgemeinen sowohl anwendbar für nasslaufende Reibkupplungen 16, 18 als auch für trockene Reibkupplungen, die sowohl mittels hydraulischer Aktuatoren als auch mittels elektromotorischer Aktuatoren betrieben werden können.

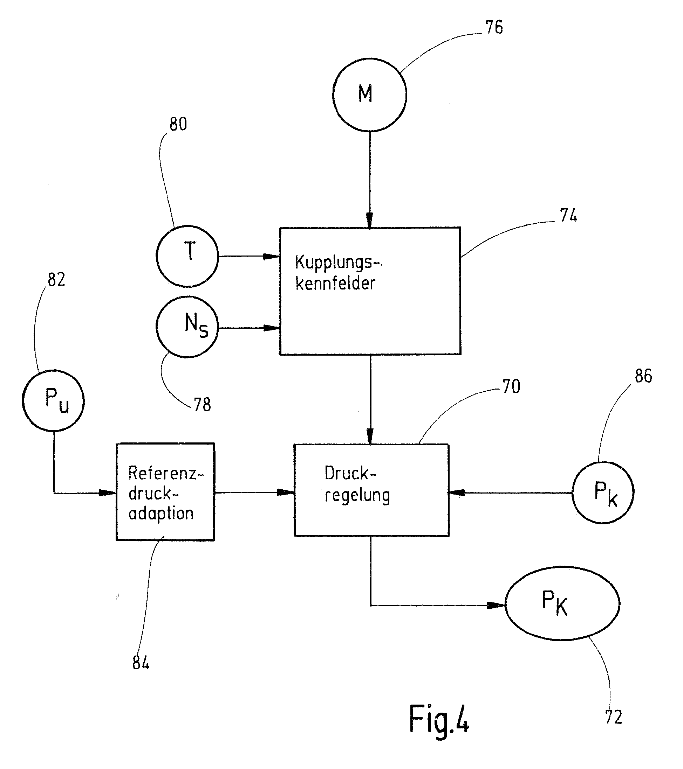

In Fig. 4 ist ein mögliches Schaltbild zur Druckregelung des Kupplungsdrucks schematisch dargestellt.

Die in Fig. 4 dargestellte Funktion zur Druckregelung 70 weist verschiedene Eingangsgrößen auf und gibt als Stellgröße den Kupplungsdruck 72 aus. Über Kupplungskennfelder 74 werden die Messgrößen Motormoment 76, Schlupfdrehzahl 78 und Kupplungstemperatur 80 bewertet und der Druckregelung 70 zur Verfügung gestellt. Weiterhin wird ein Umgebungsdruck 82 gemessen und dient als Messgröße für eine Referenzdruckadaption 84, wobei die Referenzdruckadaption 84 einen Wert ausgibt, der als Eingabegröße der Druckregelung 70 dient. Weiterhin ist ein gemessener Kupplungsinnendruck 86 eine der Eingabegrößen der Druckregelungsfunktion 70.

Die Referenzdruckadaption 84 bestimmt einen Referenzdruck zur Regelung des Kupplungsdrucks entsprechend einem gemessenen Umgebungsdruck 82, um den Kupplungsdruck auch bei schwankendem Umgebungsdruck 82 optimal regeln zu können.

Dieser Referenzdruck wird üblicherweise bei vollständig geöffneter Kupplung 16, 18 gemessen und dient als Nullpunkt. Bei einer nasslaufenden Kupplung 16, 18 wird dieser Referenzdruck 86 im Inneren der Kupplungen 16, 18 gemessen, und bei Reibkupplungen, die mittels hydraulischer Aktuatoren betätigt werden, wird der Referenzdruck im Inneren der Aktuatoren gemessen. Üblicherweise ist die geöffnete Kupplung 16, 18 mit einem Restdruck beaufschlagt, damit die Hydraulik in einem befüllten Zustand bleibt. Dieser Nullpunkt liegt üblicherweise bei ca. 0,4 bar. Bei längeren Fahrten ohne Gangwechsel bleibt die Kupplung 16, 18 allerdings über längere Zeit geschlossen, und der Referenzdruck kann über längere Zeit nicht gemessen werden. In besonderen Situationen, wenn z.B. größere Höhendifferenzen überwunden werden, ohne die Gangstufe zu wechseln, kann der festgelegte Referenzdruck aufgrund des geänderten Umgebungsdrucks 82 zu einer fehlerhafter Druckregelung 70 führen. Um derartige Außendruckschwankungen zu kompensieren, wird der Umgebungsdruck 82 kontinuierlich gemessen. Der Referenzdruck wird mittels der Referenzdruckadaption 84 an einen sich verändernden Umgebungsdruck 82 angepasst, so dass die Druckregelung 70 auch in derartigen Fällen präzise durchgeführt werden kann. Der Umgebungsdruck kann von einem speziellen Drucksensor gemessen werden oder von einem in einer anderen Applikation vorhandenen Sensor bereitgestellt werden, wie z.B. von einem Motorsteuergerät.

Die Referenzdruckadaption 84 wird üblicherweise gestartet, wenn ein inaktives der Teilgetriebe 24, 26 gespült wird. Dies erfolgt üblicherweise mit einem zeitlichen Abstand von ca. 30 Sekunden. Dazu wird ein so genanntes cut-off-Ventil geöffnet und eine gewisse Zeit gewartet, bis sich zugeordnete hydraulische Leitungen entleert haben.

Danach wird der Kupplungsdruck 72 gemessen, ausgewertet und mittels einer zeitabhängigen Filterkonstante aufbereitet.

Sofern die Druckmessung einen Kupplungsdruck 72 oberhalb eines vordefinierten Wertes, z.B. 1,2 bar, liefert, kann ein Eintrag in einen Fehlerspeicher erfolgen und das Teilgetriebe gesperrt werden.

Weiterhin ist es auch vorteilhaft, die Referenzdruckadaption bei unterschiedlichen Geschwindigkeiten durchzuführen.

Über die Kupplungskennfelder 74 werden die Messgrößen Motormoment 76, Schlupfdrehzahl 78 und Kupplungstemperatur 80 in Beziehung gesetzt bzw. bewertet und so der Druckregelung 70 zur Verfügung gestellt. Dabei ist es denkbar, dass die Kupplungskennfelder 74 anhand der gemessenen Messgrößen in Bezug auf den beaufschlagten Kupplungsdruck 72 bzw. den gemessenen Kupplungsdruck 86 oder das Wertepaar aus Kupplungsdruck 72 und übertragbarem Motormoment angepasst werden. Weiterhin ist es denkbar, dass verschiedene Kupplungskennfelder 74 verwendet werden in Abhängigkeit der eingelegten Gangstufe.

## Patentansprüche

1. Verfahren zum Öffnen einer geschlossenen Kupplungsanordnung (16, 18) eines Antriebstrangs (10) für ein Kraftfahrzeug, wobei die Kupplungsanordnung (16, 18) so angesteuert wird, dass das von ihr übertragbare Moment bis zu einem Öffnungspunkt (56) verringert wird, bei dem kein Moment mehr über die Kupplungsanordnung (16, 18) übertragbar ist, und wobei vor Erreichen des Öffnungspunktes (56) die Kupplungsanordnung (16, 18) in einen zwischenzeitlichen Schlupfzustand (48) gebracht wird, wobei der auf die Kupplungsanordnung (16, 18) aufgebrachte Druck, bei dem ein vorab definiertes Schlupfniveau erreicht ist, und das übertragbare Drehmoment erfasst und als Wertepaar gespeichert werden, wobei der auf die Kupplungsanordnung (16, 18) aufgebrachte Druck nach Erreichen des Schlupfzustandes (48) erhöht wird, so dass der Schlupfzustand (48) wieder aufgehoben wird, und wobei die Kupplungsanordnung (16, 18) vor jedem Schaltvorgang in den zwischenzeitlichen Schlupfzustand (48) gebracht wird.

2. Verfahren nach Anspruch 1, wobei das von der Kupplungsanordnung (16, 18) übertragbare Drehmoment zum Erreichen des Schlupfzustandes (48) linear abgesenkt wird.

3. Verfahren nach Anspruch 1, wobei das von der Kupplungsanordnung (16, 18) übertragbare Drehmoment zum Erreichen des Schlupfzustandes (48) pulsförmig abgesenkt wird.

4. Verfahren nach einem der Ansprüche 1 bis 3, wobei der Kupplungsdruck um einen vordefinierten Wert angehoben wird.

5. Verfahren nach einem der Ansprüche 1 bis 4, wobei das gespeicherte Wertepaar zum Steuern der Kupplungsanordnung (16, 18) bei nachfolgenden Öffnungsvorgängen verwendet wird.

6. Verfahren nach Anspruch 5, wobei das gespeicherte Wertepaar zum Steuern einer zweiten Kupplungsanordnung (16, 18) verwendet wird.

7. Verfahren nach einem der Ansprüche 1 bis 6, wobei die Kupplungsanordnung (16, 18) eine nasslaufende Kupplung aufweist.

8. Verfahren nach einem der Ansprüche 1 bis 7, wobei die Kupplungsanordnung (16, 18) mittels eines hydraulischen Aktuators betätigt wird.

9. Verfahren nach Anspruch 7 oder 8, wobei in einem geöffneten Zustand, in dem von der Kupplungsanordnung (16, 18) kein Drehmoment übertragen werden kann, ein hydraulischer Innendruck der Kupplungsanordnung erfasst wird und als Referenzdruck für den auf die Kupplungsanordnung aufgebrachten Druck verwendet wird.

10. Verfahren nach Anspruch 9, wobei der Referenzdruck im geschlossenen Zustand der Kupplungsanordnung (16, 18) entsprechend eines variierenden Außendrucks angepasst wird.

## Claims

1. Method for opening a closed clutch arrangement (16, 18) of a drivetrain (10) for a motor vehicle, wherein the clutch arrangement (16, 18) is activated in such a way that the torque which it can transmit is reduced up to an opening point (56) at which torque can no longer be transmitted via the clutch arrangement (16, 18), and wherein the clutch arrangement (16, 18) is placed into an intermediate slip state (48) before the opening point (56) is reached, wherein the pressure applied to the clutch arrangement (16,18) at which a previously defined slip level is reached, and the transmissible torque, are measured and stored as a value pair, wherein the pressure applied to the clutch arrangement (16, 18) is increased after the slip state (48) is reached such that the slip state (48) is ended again, and wherein the clutch arrangement (16, 18) is placed into the intermediate slip state (48) before each shift process.

2. Method according to Claim 1, wherein the torque which can be transmitted by the clutch arrangement (16, 18) is reduced linearly to reach the slip state (48).

3. Method according to Claim 1, wherein the torque which can be transmitted by the clutch arrangement (16, 18) is reduced in a pulsed fashion to reach the slip state (48).

4. Method according to one of Claims 1 to 3, wherein the clutch pressure is raised by a predefined value.

5. Method according to one of Claims 1 to 4, wherein the stored value pair is used for controlling the clutch arrangement (16, 18) during subsequent opening processes.

6. Method according to Claim 5, wherein the stored value pair is used for controlling a second clutch arrangement (16, 18).

7. Method according to one of Claims 1 to 6, wherein the clutch arrangement (16, 18) has a wet-running clutch.

8. Method according to one of Claims 1 to 7, wherein the clutch arrangement (16, 18) is actuated by means of a hydraulic actuator.

9. Method according to Claim 7 or 8, wherein, in an open state in which no torque can be transmitted by the clutch arrangement (16, 18), a hydraulic internal pressure of the clutch arrangement is measured and is used as a reference pressure for the pressure applied to the clutch arrangement.

10. Method according to Claim 9, wherein the reference pressure is adapted in the closed state of the clutch arrangement (16, 18) corresponding to a varying outside pressure.

## Revendications

1. Procédé pour l'ouverture d'un agencement d'embrayage (16, 18) fermé d'une chaîne cinématique (10) pour un véhicule automobile, l'agencement d'embrayage (16, 18) étant commandé de telle sorte que le couple qu'il peut transmettre soit réduit jusqu'à un point d'ouverture (56) auquel aucun couple ne peut plus être transmis par le biais de l'agencement d'embrayage (16, 18) et l'agencement d'embrayage (16, 18) étant amené, avant que le point d'ouverture (56) ne soit atteint, dans un état de glissement intermédiaire (48), la pression appliquée sur l'agencement d'embrayage (16, 18), à laquelle un niveau de glissement défini préalablement est atteint, et le couple pouvant être transmis étant détectés et mémorisés en tant que paire de valeurs, la pression appliquée sur l'agencement d'embrayage (16, 18) étant augmentée après que l'état de glissement (48) a été atteint, de telle sorte que l'état de glissement (48) soit à nouveau supprimé, et l'agencement d'embrayage (16, 18) étant amené avant chaque opération de changement de vitesse dans l'état de glissement intermédiaire (48).

2. Procédé selon la revendication 1, dans lequel le couple pouvant être transmis par l'agencement d'embrayage (16, 18) est abaissé linéairement pour atteindre l'état de glissement (48).

3. Procédé selon la revendication 1, dans lequel le couple pouvant être transmis par l'agencement d'embrayage (16, 18) est abaissé de manière impulsionnelle pour atteindre l'état de glissement (48).

4. Procédé selon l'une quelconque des revendications 1 à 3, dans lequel la pression d'embrayage est augmentée d'une valeur prédéfinie.

5. Procédé selon l'une quelconque des revendications 1 à 4, dans lequel la paire de valeurs mémorisée est utilisée pour commander l'agencement d'embrayage (16, 18) lors d'opérations d'ouverture subséquentes.

6. Procédé selon la revendication 5, dans lequel la paire de valeurs mémorisée est utilisée pour commander un deuxième agencement d'embrayage (96, 18).

7. Procédé selon l'une quelconque des revendications 1 à 6, dans lequel l'agencement d'embrayage (16, 18) présente un embrayage humide.

8. Procédé selon l'une quelconque des revendications 1 à 7, dans lequel l'agencement d'embrayage (16, 18) est actionné au moyen d'un actionneur hydraulique.

9. Procédé selon la revendication 7 ou 8, dans lequel, dans un état ouvert, dans lequel aucun couple ne peut être transmis par l'agencement d'embrayage (16, 18), une pression hydraulique interne de l'agencement d'embrayage est détectée et est utilisée en tant que pression de référence pour la pression appliquée sur l'agencement d'embrayage.

10. Procédé selon la revendication 9, dans lequel la pression de référence, dans l'état fermé de l'agencement d'embrayage (16, 18), est adaptée en fonction d'une pression extérieure variable.
